# EUROPÄISCHE PATENTSCHRIFT

(11) **EP 3 461 801 B1**
(45) Veröffentlichungstag und Bekanntmachung des Hinweises auf die Patenterteilung: **27.10.2021**
(21) Anmeldenummer: 17194100.8
(22) Anmeldetag: 29.09.2017
(51) Int. Cl.: C04B 30/02, C04B 18/24, C04B 20/00

(54) **VERFAHREN ZUR HERSTELLUNG VON PFLANZENFASERDÄMMMATERIALIEN FÜR EINBLAS- ODER SCHÜTTDÄMMUNGEN**
METHOD FOR THE PREPARATION OF PLANT FIBRE INSULATION MATERIALS FOR INJECTED OR POURED IN INSULATION
PROCÉDÉ DE FABRICATION DE MATÉRIAUX ISOLANTS EN FIBRES VÉGÉTALES POUR ISOLANTS SOUFFLÉS OU EN VRAC

(43) Veröffentlichungstag der Anmeldung: 03.04.2019
(73) Patentinhaber: DAW SE, 64372 Ober-Ramstadt (DE)
(72) Erfinder: MÜKISCH, Herbert, 3072 Kasten (AT); VAY, Oliver, 1210 Wien (AT); FRÖMEL-FRYBORT, Stephan, 1080 Wien (AT); PINKL, Stefan, 2136 Laa an der Taya (AT); MÖSELER, Boris, 3474 Kirchenberg am Wagram (AT); HANSMANN, Christian, 3465 Königsbrunn am Wagram (AT)
(74) Vertreter: Metten, Karl-Heinz

(56) Entgegenhaltungen:
- EP-A2- 2 400 075
- WO-A2-2008/073186
- CN-A- 104 526 831
- DE-U1- 29 606 160
- DE-U1- 29 720 320
- Annette Galinski und Nicole Paul: "Dämmen mit Baustroh - Option mit vielen Vor(ur)teilen", Wohnungsbau , 1. Februar 2015 (2015-02-01), XP002780222, Gefunden im Internet: URL:https://www.fnr.de/uploads/media/Beleg _BBB_Strohtext.pdf [gefunden am 2018-04-17]

## Beschreibung

Die vorliegende Erfindung betrifft ein Verfahren zur Herstellung von Pflanzenfaserdämmmaterialien für Einblas- oder Schüttdämmungen.

Getreidestroh wird vermehrt entweder in Form gepresster Strohballen oder als Einblasdämmung für die Wärmedämmung von Gebäuden eingesetzt. Auf diese Weise wird versucht, den Einsatz fossiler Ressourcen bei der Wärmedämmung möglichst gering zu halten. Anders als bei Dämmmaterialien auf der Basis von Polymerschäumen wird bei auf Stroh basierenden Dämmmaterialien bei Kontakt mit Feuchtigkeit sehr schnell Schimmelbildung beobachtet. Auch kann eine homogene Dämmung, d.h. eine gleichbleibend hohe Wärmedämmung über eine größere Fläche noch nicht stets gewährleistet werden.

Mit der DE 296 06 160 wird ein Wärmedämmstoff aus Fasern von Getreidestroh in solcher Qualität angestrebt, dass dieser als schütt- und einblasfähiger Dämmstoff eingesetzt werden kann, der nach Einbringung eine dichte, federnde und fugenlose Dämmung bildet. Dies soll durch die Verwendung von Getreidestrohfasern mit einer durchschnittlichen Länge von 15 mm gelingen, welche vorzugsweise mit Borsäure, Borax, Wasserglas, Ammoniumsulfat oder Silikonharzverbindungen imprägniert sind.

Die WO 2008/073186 betrifft ein Verfahren zum Ändern einer molekularen Struktur eines Biomasse-Einsatzmaterials, bei dem das Biomasse-Einsatzmaterial zerkleinert und anschließend in einem weiteren Vorbehandlungsschritt mindestens zwei der nachfolgend genannten Verfahren ausgesetzt wird: Bestrahlung, Beschallung, Pyrolyse und Oxidation. Auf diese Weise soll man z.B. zu zellulosehaltigen oder lignozellulosehaltigen Materialien gelangen, die ein geringeres Molekulargewicht oder eine geringere Kristallinität im Vergleich zu einem nativen Material aufweisen und die leichter von einer Vielzahl von Mikroorganismen genutzt werden können, um z.B. Wasserstoff, Alkohole, organische Säuren, Kohlenwasserstoffe, Proteine oder Mischungen hiervon zu erzeugen.

Die CN 104 526 831 A beschreibt ein Verfahren zur Herstellung von Reisstroh- oder Weizenstrohpappe, die zur Erhöhung der Haftfestigkeit von Stroh durch eine nasschemische Behandlung hergestellt wird, umfassend die Schritte 1) Pulverisieren des Reis- oder Weizenstrohs, 2) Behandeln des pulverisierten Strohs mit Wasserdampf zum Lösen von wachsartigen Substanzen von der Strohoberfläche, wodurch die Oberflächenpolarität des Strohs erhöht und die Adhäsionsklebstoffleistung verbessert wird, 3) Trocknen des nach Schritt 2) erhaltenden Strohs und Aufreinigung, 4) Behandeln des nach Schritt 3) erhaltenen Strohs bei erhöhter Temperatur mit einem Silan-Kupplungsmittel in Wasser unter Ausbildung chemischer Bindungen mit der Strohoberfläche, wobei eine funktionelle Gruppe verbleibt, die in der Lage ist, mit einem Zellulose-Harz eine chemische Bindung einzugehen.

Aus der DE 296 06 160 U1 geht ein schütt- und maschinell einblasfähiger WärmeDämmstoff aus Getreidestroh in Form von Fasern mit einer durchschnittlichen Länge von 15 mm hervor. Diese schütt- und maschinell einblasfähigen Wärme- Dämmstoffe sollen für die Wärmedämmung von Steildächern, Innen- und Außenwänden, Fußböden und Decken im Hochbau geeignet sein.

Die DE 297 20 320 U1 stellt ab auf einen Dämmstoff aus Stroh und/oder anderen pflanzlichen Faserstoffen und Schaumstoffen, wobei der Ausgangsstoff für den Schaumstoff in flüssiger Form mit den Strohfasem gemischt wird. Auf diese Weise soll bei nur geringfügiger Änderung der Dämmeigenschaften gegenüber dem geschäumten reinen Kunststoff die Festigkeit des ausgehärteten Produkts erhöht und gleichzeitig eine Schimmelbildung an den Fasern bzw. eine biologische Zersetzung auf andere Weise verhindert werden können.

Der vorliegenden Erfindung lag die Aufgabe zugrunde, einen zuverlässigen, kostengünstigen Zugang zu Einblasdämmmaterialien zur Verfügung zu stellen, welche sicheinwandfrei transportieren lassen und die zudem eine homogene, hochwertige Einblasdämmung liefern.

Demgemäß wurde ein Verfahren gemäß den Merkmalen des Patentanspruchs 1 gefunden.

Bevorzugt wird für das getrocknete, vorzugsweise vorzerkleinerte, insbesondere in der Länge verkürzte, Pflanzenmaterial, das mit einer Kutikula ausgestattet ist, auf Gräser wie Süß- und Sauergräser zurückgegriffen, wobei Getreidestroh besonders bevorzugt ist. Bei Getreidestroh im Sinne der Erfindung handelt es sich um ausgedroschene trockene Halme und Blätter von Getreide. In einer möglichen Ausgestaltung wird dieses Getreidestroh zunächst in zu Ballen verpresster Form zur Verfügung gestellt. Bei der Bearbeitung, z.B. dem Ausdreschen von Getreidestroh, und insbesondere überdies auch beim Pressen zu Ballen wird Getreidestroh stets geknickt, zerrissen und/oder geschnitten, d.h. zumindest in Teilen vorzerkleinert. Auch kommen in der Zwischenzeit Ballenpressen zum Einsatz, die über Zerkleinerungswerkzeuge verfügen. Bei Getreidestroh handelt es sich im Sinne der Erfindung demgemäß um zumindest in Teilen vorzerkleinertes Pflanzenmaterial. Dabei kann das Getreidestroh bevorzugt ausgewählt sein aus der Gruppe bestehend aus Weizenstroh, Gerstenstroh, Roggenstroh, Dinkelstroh, Haferstroh, Reisstroh und beliebigen Mischungen hiervon, insbesondere Weizenstroh.

Bei der Kutikula der Pflanzen handelt es sich regelmäßig um einen wachsartigen Überzug, dessen hydrophobe Eigenschaften Wasserverluste verringern helfen. Die Kutikula ist dabei im Allgemeinen auf Blättern und Stängeln von Pflanzen zu finden. Die Rhizodermis von Pflanzen weist hingegen keine Kutikula auf, um die Wasser- und Nährstoffaufnahme nicht zu behindern. Insbesondere beim Stroh von Getreide führt die Kutikula zu einer sehr glatten und ebenen Fläche, die verhindert, dass diese Bestandteile des Strohs aneinander oder an anderen Gegenständen haften bleiben. Dieses erschwert häufig das Fördern größerer Mengen an Stroh.

Die Behandlung des Pflanzenmaterials, insbesondere Getreidestrohs, in Schritt b) umfasst in einer zweckmäßigen Ausgestaltung die Behandlung in einer Nassdampf-, Sattdampf- und/oder Heißdampfatmosphäre, d.h. die Beaufschlagung mit Wärme und Wasser. Hierfür kann man auch, alternativ oder zusätzlich, das zur Verfügung gestellte Pflanzmaterial in einem wässrigen System kochen. Nassdampf bildet sich z.B. regelmäßig durch Sieden des Wassers in einem geschlossenen Behälter in einer dichten Dampfatmosphäre, wobei während der Verdampfung vom Dampf kleine Wassertröpfchen mitgerissen werden und sich ebenfalls in der Dampfatmosphäre befinden. Sobald sich bei diesem Vorgang ein Gleichgewicht zwischen dem Verdampfungsdruck des Wassers und dem Druck des Wasserdampfs einstellt, spricht man von Sattdampf. Erhitzt man einen vom (siedenden) Wasser abgetrennten Sattdampf weiter, erhält man sogenannten Heißdampf.

Durch den Behandlungsschritt b) wird das Pflanzenmaterial, insbesondere Getreidestroh, gemäß a) gegenüber seinem Zustand vor diesem Behandlungsschritt in einen Zustand höherer Flexibilität überführt. Beispielsweise lassen sich die derart behandelten Pflanzenmaterialien in einem stärkeren Ausmaß biegen, ohne dass ein Knicken bzw. Abknicken oder Brechen eintritt. In anderen Worten, durch die Überführung des Pflanzenmaterials in einen Zustand höherer Flexibilität kann ein Verkürzen der Fasern des Pflanzenmaterials minimiert werden. Auch kann mit diesem Behandlungsschritt in einer bevorzugten Ausgestaltung die zumindest teilweise Ablösung der wachsartigen Cuticula der Halme bewerkstelligt werden.

In einer Ausgestaltung kann das Getreidestroh in Schritt a) in Form eines vorzerkleinerten Pflanzenmaterials im Sinne der Erfindung, wie vorangehend definiert, eingesetzt werden. Alternativ oder zusätzlich kann in Schritt a) auch auf weitergehend zerkleinertes Getreidestroh, beispielsweise geschnittenes Getreidestroh, zum Beispiel auf Längen im Bereich von 5 bis 10 cm, zurückgegriffen werden. Nicht weitergehend zerkleinert im Sinne der vorliegenden Erfindung liegt Getreidestroh dann vor, wenn es abgesehen von dem Dreschvorgang und einem etwaigen Verpressvorgang zum Herstellen von Ballen sowie dem anschließenden Auflösen und Auflockern der Ballen keinem weiteren expliziten Zerkleinerungsschritt unterworfen worden ist.

In einer besonders zweckmäßigen Ausgestaltung ist vorgesehen, dass das Getreidestroh im Wesentlichen chemisch und/oder thermisch unbehandelt in Schritt d) zur Verfügung gestellt wird.

Nach dem Verfahrensschritt des Trocknens (Schritt d)) verfügt das dabei erhaltene Pflanzenmaterial, insbesondere das Getreidestroh, vorzugsweise über eine Restfeuchte im Bereich von 7 bis 20 Gewichtsprozent und besonders bevorzugt im Bereich von 10 bis 15 Gewichtsprozent.

Für das mechanische und gegebenenfalls chemische zerkleinernde Aufbereiten des gemäß Schritt b) erhaltenen Pflanzenmaterials, insbesondere Getreidestrohs, in dem Refiner in Schritt c) bedient man sich erfindungsgemäß einem thermomechanischen (TMP) oder einen chemo-thermomechanischen (CTMP) Refiner-Prozess. TMP ("thermomechanical pulping")- and CTMP ("chemothermomechanical pulping")-Prozesse sind dem Fachmann aus der Papierherstellung bekannt und werden z.B. bei R. G. Macdonald & J. N. Franklin in "Pulp and Paper Manufacture", 3. Vol., 2. Aufl., Vol. 1: "The Pulping of Wood, 1969; Vol. 2: "Control, Secondary Fiber, Structural Board, Coating", 1969, und Vol. 3: "Papermaking and Paper board Making", 1970, The Joint Textbook Committee of the Paper Industry, und von M. J. Kocurek und C. F. B. Stevens in "Pulp and Paper Manufacture", Vol. 1: "Properties of Fibrous Raw Materials and Their Preparation for Pulping", The Joint Textbook Committee of the Paper Industry, 1983, Seite 182, beschrieben.

Der in diesem Verfahrensschritt c) zum Einsatz kommende Refiner ist mit einem Rotor und einem Stator ausgestattet, wobei der

Abstand zwischen Rotor und Stator zwischen 0,0 mm und 5,0 mm, bevorzugt im Bereich von 0,05 mm bis 3,5 mm, besonders bevorzugt im Bereich von 0,1 mm bis 3,5 mm und insbesondere im Bereich von 0,1 mm bis 2,0 mm, liegt.

Wird für das Zerkleinern des insbesondere vorzerkleinerten Pflanzenmaterials in Schritt c) auf einen Refiner zurückgegriffen, hat es sich als sehr vorteilhaft erwiesen, hieran einen Druckentspannungsschritt, wie dieser z.B. von dem Dampfexplosionsverfahren bekannt ist, anzuschließen. Hierbei kann das Zerkleinern in dem Refiner in der Weise vorgenommen werden, dass das bearbeitete Pflanzenmaterial unter Druck gesetzt wird, beispielsweise durch den Einsatz von Wasserdampf. Beim Verlassen des Refiners erfährt das zerkleinerte Pflanzenmaterial dann eine Druckentspannung, was regelmäßig zu einer noch weitergehenden Zerkleinerung beiträgt.

Vor allem durch die Kombination der insbesondere unmittelbar aufeinander folgenden Verfahrensschritte b) und c) gelingt es regelmäßig, die wachsartige Kutikula von dem Pflanzenmaterial abzulösen und folglich von dem Fasermaterial zu entfernen. Auf diese Weise gelangt man zu aufbereiteten Pflanzenmaterialien, die sich zuverlässig und unproblematisch fördern lassen und die in den Folgeschritten zu einer homogenen Verteilung der Bestandteile der Pflanzenmaterialien in Pflanzenfaserdämmmungen wie Einblas- und Schüttdämmungen führen.

Ferner hat es sich für viele Zwecke als besonders bevorzugt erwiesen, das eingesetzte Pflanzenmaterial nach Schritt b) und/oder c) und/oder d) oder zwischen Schritt b) und c) oder zwischen Schritt c) und d) oder nach Schritt d) mit mindestens einem Flammschutzmittel und/oder mindestens einem Hydrophobierungsmittel und/oder mindestens einem Biozid zu behandeln. Demgemäß kommt bei dem erfindungsgemäßen Verfahren regelmäßig ebenfalls eine Vorrichtung zur Beaufschlagung des Pflanzenmaterials, insbesondere des Getreidestrohs, mit mindestens einem Flammschutzmittel und/oder mindestens einem Hydrophobierungsmittel und/oder mindestens einem Biozid zum Einsatz. Hierbei haben sich derartige Vorrichtungen als besonders geeignet erwiesen, mit denen sich das Pflanzenmaterial mit einem wässrigen System, enthaltend mindestens ein Flammschutzmittel und/oder mindestens ein Hydrophobierungsmittel und/oder mindestens ein Biozid, besprühen lässt.

Geeignete Flammschutzmittel können hierbei ausgewählt werden aus der Gruppe bestehend aus stickstoffhaltigen Phosphaten, insbesondere Ammonium-, Melamin- oder Guanidinphosphat, Aluminiumphosphaten, Aluminiumhydroxid, Boraten, insbesondere Ammonium-, Melamin-, Guanidin-, Kalium- oder Natriumboraten, Borsäure, Borphosphorsäureestern, prä-oxidierten Viskosefasern, prä-oxidierten Polyacrylnitril-Fasern, Kohlenstofffasern,Reisschalen, Blähgraphit oder deren beliebige Mischungen, wobei Blähgraphit besonders bevorzugt ist. Hierbei lassen sich stickstoffhaltige Phosphate, insbesondere Ammonium-, Melamin- oder Guanidinphosphate, Aluminiumphosphate, Borate, insbesondere Ammonium-, Melamin-, Guanidin-, Kalium- oder Natriumborate, Borsäure oder Borphosphorsäureester oder deren beliebige Mischungen sehr wirksam in Form von wässrigen Systemen, beispielsweise wässrigen Lösungen, in und/oder nach den Schritten b) und/oder c) in das dabei vorliegende Material eintragen.

Weiterhin ist es bevorzugt, insbesondere vor Schritt b) und/oder nach Schritt d), das Pflanzenmaterial von Förderluft und/oder Staubteilchen zu befreien. Auf diese Weise lässt sich eine besonders gute und gleichmäßige Dämmung mit Hilfe der erhaltenen Pflanzenfaserdämmmaterialien, insbesondere Einblas- oder Schüttdämm-materialien erzielen. Hierfür kann z.B. auf eine mit Unterdruck beaufschlagte bzw. beaufschlagbare Siebtrommel zurückgegriffen werden.

Die nach dem erfindungsgemäßen Verfahren erhältlichen Pflanzenfaserdämmmaterialien, insbesondere

Einblas- oder Schüttdämmmaterialien, zeichnen sich durch eine besonders zuverlässige Transportfähigkeit aus. Beim Transport von zerkleinertem Pflanzmaterial, insbesondere Getreidestroh, findet keine Entmischung statt, auch wird das Material stets problemlos auch über längere Förderstrecken transportiert.

Das vorzerkleinerte Pflanzenmaterial, insbesondere Getreidestroh, verfügt vorzugsweise über eine durchschnittliche Länge, insbesondere absolute Länge im Bereich von 0,1 cm bis 25 cm, bevorzugt im Bereich von 0,3 cm bis 15 cm und besonders bevorzugt im Bereich von 0,5 bis 12 cm. Alternativ und insbesondere zusätzlich kann das zerkleinerte Pflanzenmaterial, insbesondere Getreidestroh, eine durchschnittliche Länge, insbesondere absolute Länge, im Bereich von 1 mm bis 70 mm und besonders bevorzugt im Bereich von 3 mm bis 50 mm, beispielsweise 5 mm bis 40 mm, aufweisen. Auch kann der Zerkleinerungsschritt derart eingestellt werden, dass zerkleinertes Pflanzenmaterial mit z.B. einer durchschnittlichen Länge, insbesondere absoluten Länge, im Bereich von 0,5 cm bis 25 cm, 7,5 cm bis 25 cm, 1 cm bis 20 cm, 8 cm bis 20 cm, 1,5 cm bis 10 cm oder 8 cm bis 12 cm erhalten wird. Die Länge des gegebenenfalls vorzerkleinerten Pflanzenmaterials ist in diesen Fällen entsprechend größer gewählt, damit eine Einkürzung auf die genannten Längenbereiche erfolgen kann.

Aus den nach dem erfindungsgemäßen Verfahren erhältlichen Pflanzenfaserdämmmaterialien, insbesondere Einblasdämmmaterialien, kann eine Pflanzenfaserdämmmung, insbesondere Einblasdämmung, gebildet werden.

Ferner können Gebäude bzw. Teile hiervon mit der Pflanzenfaserdämmmung, insbesondere Einblas- oder Schüttdämmung bzw. den nach dem erfindungsgemäßen Verfahren erhältlichen Pflanzenfaserdämmmaterialien, insbesondere Einblas- oder Schüttdämmmaterialien, gedämmt werden.

Der vorliegenden Erfindung liegt die überraschende Erkenntnis zu Grunde, dass das sich mit dem erfindungsgemäßen Verfahren zuverlässig Pflanzenfaserdämmmaterialien, insbesondere Einblasdämmmaterialien, erhalten lassen, die sich durch eine homogene Verteilung der zerkleinerten Bestandteile auszeichnen und die sich außerdem unproblematisch und, ohne dass sich Entmischungsphänomene einstellen, transportieren lassen. In anderen Worten, Pflanzenmaterialien, die mit einer Kutikula ausgestattet sind, wie Getreidestroh, lassen sich ohne weiteres auf herkömmlichen Verarbeitungsmaschinen transportieren, ohne dass ein ungleichmäßiger Materialtransport befürchtet werden muss. Außerdem wurde überraschend gefunden, dass mit den nach dem erfindungsgemäßen Verfahren erhältlichen Pflanzenfaserdämmmaterialien, insbesondere Einblas- oder Schüttdämmmaterialien, Pflanzenfaserdämmungen, insbesondere Einblas- bzw. Schüttdämmungen mit sehr homogener, guter Wärmedämmung zugänglich sind. Diese Resultate stellen sich überraschenderweise insbesondere bei Verwendung von Getreidestroh als Ausgangsmaterial ein.

Auch hat sich als vorteilhaft erwiesen, dass sich gekräuseltes Material erhalten lässt, das über ein für Dämmzwecke sehr gut geeignetes Masse- zu Volumenverhältnis verfügt, das zudem mit einer geringen Einblas- bzw. Schüttdichte ausgestattet ist und dem ein günstiges Setzverhalten und gute Wärmedämmeigenschaften eigen sind. Besonders vorteilhaft wirken sich auf die Verwendbarkeit auch die leichte Verarbeitbarkeit und die gute Einblasbarkeit aus.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Verfahren zur Herstellung von Pflanzenfaserdämmmaterialien für Einblasdämmungen oder Schüttdämmungen, umfassend
a) die Zurverfügungstellung von gegebenenfalls getrocknetem sowie gegebenenfalls vorzerkleinertem, insbesondere in der Länge verkürztem, Pflanzenmaterial, das mit einer Kutikula ausgestattet ist,
b) Behandeln des Pflanzenmaterials gemäß a), so dass dieses Pflanzenmaterial in einen Zustand höherer Flexibilität überführt wird, insbesondere mit Wärme und/oder Wasser und/oder Wasserdampf,
c) mechanisches und gegebenenfalls chemisches zerkleinerndes Aufbereiten des gemäß Schritt b) erhaltenen Pflanzenmaterials in mindestens einem Refiner, wobei der Refiner einen Rotor und einen Stator aufweist, wobei der Abstand zwischen Rotor und Stator in Schritt c) zwischen 0,0 mm und 5,0 mm liegt, und wobei das zerkleinernde Aufbereiten gemäß Schritt c) in dem Refiner einen thermomechanischen (TMP) oder einen chemo-thermomechanischen (CTMP) Refiner-Prozess umfasst,
d) Trocknen des gemäß Schritt c) aufbereiteten Pflanzenmaterials,
wobei das Pflanzenmaterial nach Schritt d) über eine Restfeuchte im Bereich von 5 bis 25 Gewichtsprozent verfügt, und
e) gegebenenfalls Versetzten des Pflanzenmaterials in und/oder nach Schritt a) und/oder in und/oder nach Schritt b) und/oder in und/oder nach c) und/oder Versetzen des getrockneten Pflanzenmaterials in und/oder nach Schritt d) mit mindestens einem Flammschutzmittel und/oder mindestens einem Hydrophobierungsmittel und/oder mindestens einem Biozid.

2. Verfahren nach Anspruch 1, **dadurch gekennzeichnet, dass**
Schritt b) die Behandlung des Pflanzenmaterials in einer Sattdampf- und/oder Heißdampfatmosphäre und/oder das Kochen in einem wässrigen System umfasst.

3. Verfahren nach Anspruch 1 oder 2, **dadurch gekennzeichnet, dass** das aufbereitete Pflanzenmaterial chemisch und/oder thermisch unbehandelt in Schritt d) zur Verfügung gestellt wird.

4. Verfahren nach einem der vorangehenden Ansprüche, **dadurch gekennzeichnet, dass** das Pflanzenmaterial nach Schritt d) über eine Restfeuchte im Bereich von 7 bis 20 Gewichtsprozent und besonders bevorzugt im Bereich von 10 bis 15 Gewichtsprozent verfügt.

5. Verfahren nach einem der vorangehenden Ansprüche, **dadurch gekennzeichnet, dass** das Pflanzenmaterial Getreidestroh darstellt.

6. Verfahren nach einem der vorangehenden Ansprüche, **dadurch gekennzeichnet, dass** der Abstand zwischen Rotor und Stator in Schritt c) im Bereich von 0,05 mm bis 3,5 mm und bevorzugt im Bereich von 0,1 mm bis 2,0 mm liegt.

7. Verfahren nach einem der vorangehenden Ansprüche, **dadurch gekennzeichnet, dass** das vorzerkleinerte Pflanzenmaterial eine durchschnittliche Länge, insbesondere absolute Länge, im Bereich von 0,1 cm bis 25 cm, bevorzugt im Bereich von 0,3 cm bis 15 cm und besonders bevorzugt im Bereich von 0,5 cm bis 12 cm, aufweist und/oder dass das zerkleinerte Pflanzenmaterial eine durchschnittliche Länge, insbesondere absolute Länge, im Bereich von 1 mm bis 70 mm und besonders bevorzugt im Bereich von 3 mm bis 50 mm, aufweist.

8. Verfahren nach einem der Ansprüche 5 bis 7, **dadurch gekennzeichnet, dass** das Getreidestroh ausgewählt ist aus der Gruppe bestehend aus Weizenstroh, Gerstenstroh, Roggenstroh, Dinkelstroh, Haferstroh, Reisstroh und beliebigen Mischungen hiervon, insbesondere Weizenstroh.

9. Verfahren nach einem der vorangehenden Ansprüche, **dadurch gekennzeichnet, dass** das Flammschutzmittel stickstoffhaltige Phosphate, insbesondere Ammonium-, Melamin- und/oder Guanidinphosphate, Aluminiumphosphate, Aluminiumhydroxid, Borate, insbesondere Ammonium-, Melamin-, Guanidin-, Kalium- oder Natriumborate, Borsäure, Borphosphorsäureester, prä-oxidierte Viskosefasern, prä-oxidierten Polyacrylnitril-Fasern, Kohlenstofffasern, Reisschalen, Blähgraphit oder deren beliebige Mischungen, insbesondere Blähgraphit, umfasst.

## Claims

1. A method for the preparation of plant fiber insulation materials for injected insulation or poured-in insulation, comprising
a) the provision of, if applicable, dried as well as, if applicable, pre-crushed plant material, in particular reduced in length, which is equipped with a cuticula,
b) treating the plant material according to a), such that said plant material is converted into a condition of higher flexibility, in particular with heat and/or water and/or water vapor,
c) mechanical and, if applicable, chemical crushing preparation of the plant material obtained according to step b) in at least one refiner, wherein the refiner has a rotor and a stator, wherein the distance between the rotor and stator in step c) is between 0.0 mm and 5.0 mm, and wherein the crushing preparation according to step c) in the refiner includes a thermomechanical (TMP) or a chemo-thermomechanical (CTMP) refiner process,
d) drying the plant material prepared according to step c),
wherein the plant material has a residual moisture in the region of 5 to 25 percent by weight after step d), and
e) if applicable, adding at least one flame retardant and/or at least one hydrophobing agent and/or at least one biocide to the plant material in and/or after step a) and/or in and/or after step b) and/or in and/or after c) and/or to the dried plant material in and/or after step d).

2. The method according to Claim 1, **characterized in that**
step b) comprises the treatment of the plant material in a saturated steam and/or superheated steam atmosphere and/or boiling in an aqueous system.

3. The method according to Claim 1 or 2, **characterized in that**
the processed plant material is provided in a chemically and/or thermally untreated manner in step d).

4. The method according to any one of the preceding claims, **characterized in that** the plant material after step d) has a residual moisture in the region of 7 to 20 percent by weight and, particularly preferably, in the region of 10 to 15 percent by weight.

5. The method according to any one of the preceding claims, **characterized in that** the plant material constitutes crop straw.

6. The method according to any one of the preceding claims, **characterized in that** the distance between the rotor and stator in step c) lies in the region of 0.05 mm to 3.5 mm and, preferably, in the region of 0.1 mm to 2.0 mm.

7. The method according to any one of the preceding claims, **characterized in that** the pre-crushed plant material has an average length, in particular absolute length, in the region of 0.1 cm to 25 cm, preferably in the region of 0.3 cm to 15 cm and, particularly preferably, in the region of 0.5 cm to 12 cm and/or **in that** the crushed plant material has an average length, in particular absolute length, in the region of 1 mm to 70 mm and, particularly preferably, in the region of 3 mm to 50 mm.

8. The method according to any one of Claims 5 to 7, **characterized in that** the crop straw is selected from the group consisting of wheat straw, barley straw, rye straw, spelt straw, oat straw, rice straw and any mixtures thereof, in particular wheat straw.

9. The method according to any one of the preceding claims, **characterized in that** the flame retardant includes phosphates containing nitrogen, in particular ammonium, melamine and/or guanidine phosphates, aluminum phosphates, aluminum hydroxide, borates, in particular ammonium, melamine, guanidinium, potassium or sodium borates, boric acid, boron phosphoric acid esters, pre-oxidized viscose fibers, pre-oxidized polyacrylonitrile fibers, carbon fibers, rice husks, expanded graphite or any mixtures thereof, in particular expanded graphite.

## Revendications

1. Procédé de fabrication de matériaux isolants en fibres végétales pour isolants soufflés ou isolants en vrac, comprenant
a) la mise à disposition de matériau végétal, éventuellement séché et éventuellement préalablement broyé, en particulier raccourci en longueur, qui est muni d'une cuticule,
b) le traitement du matériau végétal selon a), de telle sorte que ce matériau végétal est passé dans un état de plus grande flexibilité, en particulier avec de la chaleur et/ou de l'eau et/ou de la vapeur d'eau,
c) le traitement de broyage mécanique et éventuellement chimique du matériau végétal obtenu selon l'étape b) dans au moins une défibreuse, la défibreuse présentant un rotor et un stator, dans lequel la distance entre le rotor et le stator à l'étape c) est comprise entre 0,0 mm et 5,0 mm, et dans lequel le traitement de broyage selon l'étape c) dans la défibreuse comprend un processus de défibreuse thermomécanique (TMP) ou un processus de défibreuse chimico-thermomécanique (CTMP),
d) le séchage du matériau végétal traité selon l'étape c),
dans lequel le matériau végétal après l'étape d) présente une humidité résiduelle dans la plage de 5 à 25 % en poids, et
e) éventuellement le mélange du matériau végétal dans et/ou après l'étape a) et/ou dans et/ou après l'étape b) et/ou dans et/ou après c) et/ou le mélange du matériau végétal séché dans et/ou après l'étape d) avec au moins un agent ignifuge et/ou au moins un moyen hydrophobe et/ou au moins un biocide.

2. Procédé selon la revendication 1, **caractérisé en ce que**
l'étape b) comprend le traitement du matériau végétal sous une atmosphère de vapeur saturée et/ou de vapeur chaude et/ou la cuisson dans un système aqueux.

3. Procédé selon la revendication 1 ou 2, **caractérisé en ce que**
le matériau végétal traité est mis à disposition non traité chimiquement et/ou thermiquement à l'étape d).

4. Procédé selon l'une quelconque des revendications précédentes, **caractérisé en ce que** le matériau végétal après l'étape d) présente une humidité résiduelle dans la plage de 7 à 20 % en poids et particulièrement préférée dans la plage de 10 à 15 % en poids.

5. Procédé selon l'une quelconque des revendications précédentes, **caractérisé en ce que** le matériau végétal représente de la paille.

6. Procédé selon l'une quelconque des revendications précédentes, **caractérisé en ce que** la distance entre le rotor et le stator à l'étape c) est comprise dans la plage de 0,05 mm à 3,5 mm et de préférence dans la plage de 0,1 mm à 2,0 mm.

7. Procédé selon l'une quelconque des revendications précédentes, **caractérisé en ce que** le matériau végétal préalablement broyé présente une longueur moyenne, en particulier une longueur absolue, dans la plage de 0,1 cm à 25 cm, de préférence dans la plage de 0,3 cm à 15 cm et particulièrement préférée dans la plage de 0,5 cm à 12 cm, et/ou **en ce que** le matériau végétal broyé présente une longueur moyenne, en particulier une longueur absolue, dans la plage de 1 mm à 70 mm et particulièrement préférée dans la plage de 3 mm à 50 mm.

8. Procédé selon une des revendications 5 à 7, **caractérisé en ce que** la paille est choisie parmi le groupe composé de paille de blé, de paille d'orge, de paille de seigle, de paille d'épeautre, de paille d'avoine, de paille de riz et de mélanges quelconques de celles-ci, en particulier de paille de blé.

9. Procédé selon l'une quelconque des revendications précédentes, **caractérisé en ce que** le agent ignifuge comprend du phosphate azoté, en particulier du phosphate d'ammonium, de mélamine et/ou de guanidine, du phosphate d'aluminium, de l'hydroxyde d'aluminium, du borate, en particulier du borate d'ammonium, de mélamine, de guanidine, de potassium ou de sodium, de l'acide borique, un ester d'acide borphosphorique, des fibres de viscose pré-oxydées, des fibres de polyacrylonitrile pré-oxydées, des fibres de carbone, des écorces de riz, du graphite expansé ou des mélanges quelconques de ceux-ci, en particulier du graphite expansé.
